Europäisches Patentamt

European Patent Office

Office européen des brevets

(11) Publication number: **0 272 872**
**A2**

# EUROPEAN PATENT APPLICATION

(21) Application number: **87311053.0**

(22) Date of filing: **15.12.87**

(51) Int. Cl.⁴: **H 02 B 1/04**
**H 02 B 1/20**

(30) Priority: **15.12.86 GB 8629925**

(43) Date of publication of application:
**29.06.88 Bulletin 88/26**

(84) Designated Contracting States:
**AT BE CH DE ES FR GB GR IT LI NL SE**

(71) Applicant: **BICC Public Limited Company
Devonshire House Mayfair Place
London W1X 5FH (GB)**

(72) Inventor: **McGhie, Terence Victor
"The Coppice" Beardwood
Blackburn Lancashire (GB)**

(74) Representative: **Ross Gower, Edward Lewis et al
BICC Group Patents & Licensing Department Network
House 1 Ariel Way
London W12 7SL (GB)**

(54) **Electrical distribution boards.**

(57) In an electrical distribution board in which circuit breakers are mounted side by side on a DIN rail 1 and are electrically connected to a busbar 20, the busbar is detachably supported on at least two longitudinally spaced seperately formed brackets 10 which are detachably mounted on and are electrically insulated with respect to the DIN rail. Each circuit breaker is so detachably mounted on the DIN rail 1 and/or is so detachably connected to the busbar 20 that any circuit breaker can be removed from the DIN rail without disconnecting any other circuit breaker from the busbar or removing the busbar.

FIG 1

**Description**

ELECTRICAL DISTRIBUTION BOARDS

This invention relates to electrical distribution boards on which a plurality of circuit breakers are mounted and is especially, but not exclusively, concerned with electrical distribution boards of the kind employed in consumer units.

In electrical distribution boards of consumer units, it is a general practice to employ an elongate support rail having a transverse cross-section of channel-shape, the oppositely-disposed side walls of the channel each having along its free edge an outwardly extending flange, and to detachably mount on the support rail circuit breakers of the kind which have on an undersurface of the circuit breaker a mounting recess having on one boundary edge an inwardly turned lip and having on the oppositely disposed boundary edge an inwardly protruding catch urged by an associated spring towards the inwardy turned lip, the inwardly turned lip of each circuit breaker engaging behind one outwardly extending flange of the support rail and the spring-loaded catch making a snap fit behind the other outwardly extending flange of the support rail. It is common practice for one terminal of each circuit breaker to be clamped directly to an elongate busbar which extends alongside the support rail and by which the circuit breakers are electrically connected to a source of electricity; this busbar is either supported by the circuit breakers or by an enclosure in which the distribution board is housed. Any circuit breaker can be detached from the support rail by manually retracting the spring-loaded catch to disengage the catch from the associated flange of the support rail, tilting the circuit breaker and moving the circuit breaker laterally with respect to the support rail to disengage the inwardly turned lip from the other flange of the support rail but, in order to permit such tilting of the circuit breaker, the busbar has to be temporarily disconnected from all the circuit breakers and, where necessary from the enclosure, and withdrawn to an extent sufficient to permit such tilting of the circuit breaker to be removed to take place. This is a serious disadvantage of this known form of electrical distribution board.

It is an object of the present invention to provide an improved electrical distribution board in which the necessity to temporarily disengage and withdraw the busbar to permit removal of a circuit breaker is eliminated.

According to the invention, the improved electrical distribution board comprises an elongate support rail which has along at least one of its longer edges an upstanding side wall having along its free edge an outwardly extending flange; a plurality of circuit breakers independently mounted side by side on the support rail, each of which circuit breakers has on an undersurface a mounting recess having on one boundary edge an inwardly-turned lip engaging behind said outwardly extending flange of the support rail; and, extending alongside the support rail, an elongate busbar to which one terminal of each circuit breaker is electrically connected, wherein the busbar is detachably supported on at least two longitudinally spaced separately formed brackets which are detachably mounted on and are electrically insulated with respect to the support rail, each circuit breaker being so detachably mounted on the support rail and/or so detachably connected to the busbar that any circuit breaker can be removed from the support rail without disconnecting any other circuit breaker from the busbar or removing the busbar.

Preferably, the support rail has a transverse cross-section of channel-shape, the oppositely disposed side walls of the channel each having along its free edge an outwardly extending flange; each of the circuit breakers has on a boundary edge of its mounting recess opposite to that having an inwardly-turned lip, an inwardly protruding catch which is urged by an associated spring towards the inwardly turned lip and which is a snap fit behind the outwardly extending flange of the support rail opposite to that engaged by the inwardly-turned lip; the circuit breakers are directly clamped to the busbar; and each circuit breaker is movable with respect to its spring loaded catch in a direction towards the flange engaged by the inwardly turned lip of the circuit breaker and such relative movement is prevented by an adjustable stop which engages an abutment on the support rail, the arrangement being such that, after the circuit breaker has been disconnected from the busbar, by disengaging the adjustable stop from the abutment on the support rail, the circuit breaker can be moved with respect to the spring loaded catch to disengage the inwardly turned lip from the associated flange of the support rail and thereby permit removal of the circuit breaker.

Alternatively, each circuit breaker is indirectly electrically connected to the busbar by a separately formed link which is of such a form that, when it is desired to remove a circuit breaker from the support rail, after the link has been disconnected from the busbar and the spring-loaded catch manually retracted to disengage the catch from the associated flange of the support rail, said link will permit tilting of the circuit breaker and lateral movement of the circuit breaker with respect to the support rail to disengage the inwardly turned lip from the other flange of the support rail.

Each bracket detachably supporting the busbar on the support rail is preferably of L-shape, one limb of the L-shaped bracket being detachably connected to the support rail and the other limb of the bracket providing a support to which the busbar is detachably connected. The said one limb of the L-shaped bracket may be detachably connected to the support rail by any convenient means but, preferably, the limb has an upstanding boss with a head having a peripherally continuous or discontinuous protruding rim, the head being of such a shape that it will pass through any one of a plurality of longitudinally spaced holes in the base of the channel-shaped support rail and, by rotation of the support bracket with respect to the support rail, will detachably secure the bracket to the support rail. The head of the boss and each hole in the base of the channel-shaped support rail is preferably of approximately square shape, the head being so orientated with respect to the orientation of the holes in the support rail that, when the limbs of the bracket are substantially normal to the longitudinal axis of the support rail the bracket is detachably secured to the support rail.

Where, as is the custom, the busbar is an elongate member of L-shaped transverse cross-section, the limb of each bracket on which the busbar is supported preferably has a resilient lug integral with the limb which is of such a shape that one leg of the L-shaped busbar is clamped between a surface of the limb of the bracket and the resilient lug. For this purpose, preferably the surface of the lug nearer the surface of the limb of the bracket or said surface of the limb of the bracket has an upstanding inclined pad which presses the leg of the busbar against the opposed surface of the limb of the bracket or of the lug.

Preferably, each bracket is made of electrically insulating material.

The limb of each bracket carrying the lug by means of which a leg of the busbar is detachably secured to the bracket preferably has integral with and dependant from the undersurface of the limb at least one reinforcing fin in which is an aperture through which passes an electrically conductive neutral bar which extends lengthwise alongside the busbar. An isolator and/or a residual current circuit breaker may be electrically connected to the neutral bar and detachably mounted on the support rail, neither of which need be disconnected from the support rail when a circuit breaker is to be removed. In this case, preferably, between the limb of the bracket carrying the lug for detachably securing the busbar to the bracket and the aperture in the or each reinforcing fin through which the neutral bar passes there is provided a slot through which passes an elongate strip of electrically insulating material which provides positive electrical insulation between the busbar and the neutral bar throughout the length of the busbar.

The improved electrical distribution board of the present inventionl has the important advantage that, when the distribution board is to be mounted in an enclosure no sub-frame is necessary. Furthermore, in addition to a plurality of circuit breakers, the support rail may also have detachably mounted on the rail one or more than one of an isolator, a residual current circuit breaker, a lamp, a bell transformer, a timer and a push button, none of which need be disconnected from the support rail when a circuit breaker is to be removed.

When the distribution board is to be mounted in an enclosure, preferably the support rail is so detachably secured to a wall of the enclosure that there is sufficient space between said wall of the enclosure and the support rail to enable insulated electric conductors to pass therebetween for connection to terminals of the circuit breakers.

The invention is further illustrated by a description, by way of example, of a preferred electrical distribution board with reference to the accompanying drawings, in which:-

Figure 1 is a fragmental isometric view of a preferred form of bracket detachably connected to the support rail of the preferred electrical distribution board and supporting an elongate busbar;

Figure 2 is a fragmental isometric view of the preferred electrical distribution board showing, for convenience, a single miniature circuit breaker independently mounted on the support rail and directly electrically connected to the busbar, and

Figure 3 is a fragmental isometric view of the preferred electrical distribution board showing, for convenience, a single miniature circuit breaker independently mounted on the support rail and indirectly electrically connected to the busbar by a separately formed link.

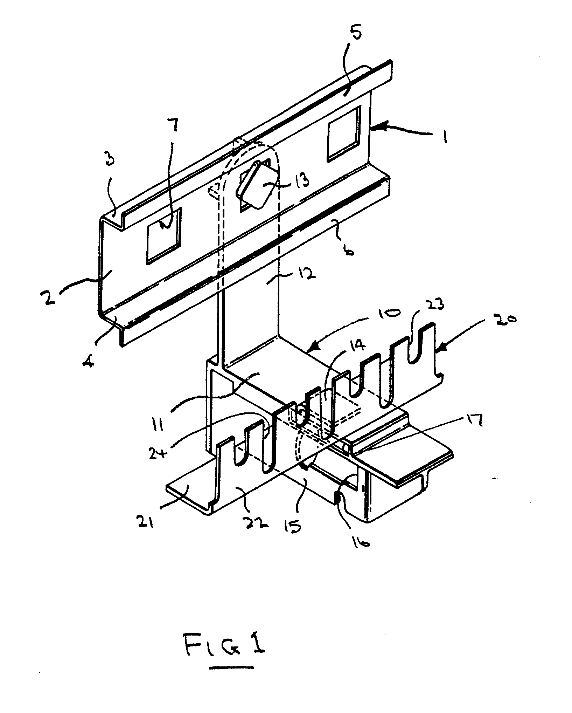

Referring to Figure 1, the preferred electrical distribution board includes an elongate support rail 1 which has a tranverse cross-section of channel-shape and which consists of a base 2 and oppositely disposed side walls 3 and 4, the side wall 3 having along its free edge an outwardly extending flange 5 and the side wall 4 having along its free edge an outwardly extending flange 6; such a support rail is generally known as a DIN rail. The base 2 of the support rail 1 has throughout its length a plurality of longitudinally spaced holes 7, each of which is of approximately square shape, oppositely disposed side walls of each hole lying substantially parallel to the longitudinal axis of the support rail.

Extending alongside the support rail 1 is an elongate busbar 20 of L-shaped transverse cross-section, one limb 21 of the busbar lying in a substantially horizontal plane and the other limb 22 of the busbar upstanding vertically therefrom. The limb 22 of the busbar 20 has throughout its length at longitudinally spaced positions in its free edge a plurality of short notches 23 and longer notches 24.

The busbar 20 is detachably supported throughout its length on three longitudinally spaced separately formed brackets 10 which, as will be explained, are detachably mounted on and are electrically insulated with respect to the support rail 1.

Each bracket 10 is made of electrically insulating plastics material and is of L-shape, one limb 11 providing a support to which the busbar 20 is detachably connected and the other limb 12 being detachably connected to the support rail 1. The limb 12 has an upstanding boss with a head 13 of approximately square shape with smoothly rounded corners, the head having a peripherally continuous protruding rim. The oppositely disposed side walls of the head 13 are inclined at approximately 45° to the side edges of the limb 12 and the head is of such a size that it will pass through any one of the holes 7 in the base 2 of the support rail 1 and, by rotation of the support bracket 10 with respect to the support rail, will detachably secure the bracket to the support rail so that, when the limbs 11 and 12 of the bracket are substantially normal to the longitudinal axis of the support rail, the bracket is detachably secured to the support rail.

The limb 11 of the bracket 10 has a resilient lug 14 integral with the limb which is of such a shape that the limb 21 of the L-shaped busbar 20 is clamped between a surface of the limb 11 and the resilient lug. For this purpose, the surface of the lug 14 nearer the surface of the limb 11 has a depending inclined pad (not shown) which presses the limb 21 of the busbar 20 against the opposed surface of the limb 11 of the bracket.

Integral with and dependant from the undersurface of the limb 11 of the bracket 10 is a reinforcing fin 15 in which is an aperture 16 through which passes an electrically conductive neutral bar (not shown) which extends lengthwise alongside the busbar 20. Between the limb 11 and the aperture 16 in the reinforcing fin 15 is a slot 17 through which passes an elongate strip of electrically insulating material (not shown) which provides positive electrical insulation between the busbar 20 and the neutral bar throughout the length of the busbar.

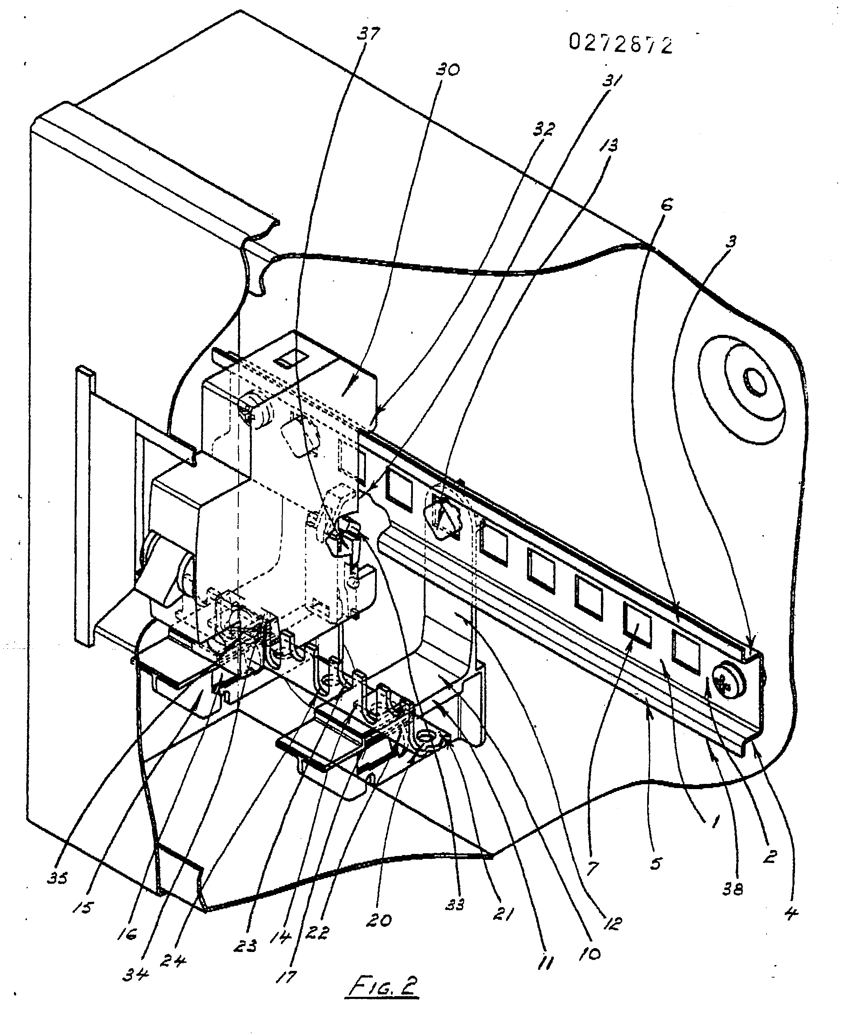

As will be seen on referring to Figure 2, in the preferred electrical distribution board each miniature circuit breaker 30 (of which, for convenience, only one is shown) has on an undersurface a mounting recess 31 having on one boundary edge an inwardly-turned lip 32 which engages behind the outwardly extending flange 5 of the support rail 1 and has on the opposite boundary edge of the mounting recess an inwardly protruding catch 33 which is urged by an associated spring towards the inwardly turned lip and which is a snap-fit behind the outwardly extending flange 6 of the support rail. The circuit breaker 30 has in screw threaded engagement with one of its terminals 34 and a clamping screw 35 which engages in one of the recesses 23, 24 of the busbar 20 to enable the circuit breaker to be detachably clamped directly to the busbar. The circuit breaker 30 is movable with respect to its spring-loaded catch 33 in a direction towards the flange 5 and such relative movement is prevented by an adjustable stop 37 which engages an abutment 38 on the support rail 1. The arrangement is such that, after the circuit breaker 30 has been disconnected from the busbar 20 by disengaging the adjustable stop 37 from the abutment 38 on the support rail 1, the circuit breaker can be moved with respect to the spring-loaded catch 33 to disengage the inwardly turned lip 32 from the flange 5 of the support rail and thereby permit removal of the circuit breaker.

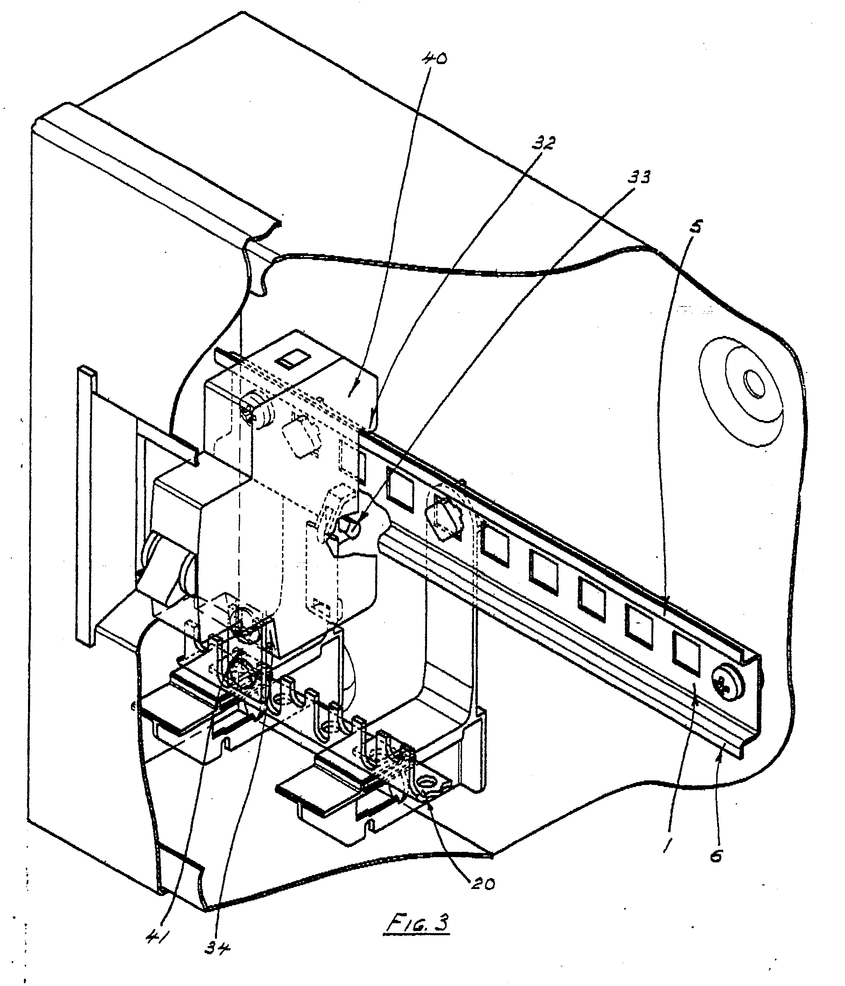

In the preferred electrical distribution board illustrated in Figure 3, all components are substantially identical to the corresponding components of the electrical distribution board shown in Figure 2 with the exception of the manner in which each circuit breaker 40 is electrically connected to the busbar 20 and, where convenient, the same numerical references are used. Each circuit breaker 40 (of which, for convenience, only one is illustrated) is indirectly electrically connected to the busbar 20 by a separately formed link 41 which is electrically connected to the terminal 34 of the circuit breaker and which is of such a form that, when it is desired to remove the circuit breaker from the support rail 1, after the link has been disconnected from the busbar 20 and the spring-loaded catch 33 manually retracted to disengage the catch from the flange 6 of the support rail, the link will permit tilting of the circuit breaker and lateral movement of the circuit breaker with respect to the support rail to disengage the inwardly turned lip 32 from the flange 5.

## Claims

1. An electrical distribution board comprising an elongate support rail which has along at least one of its longer edges an upstanding side wall having along its free edge an outwardly extending flange; a plurality of circuit breakers independently mounted side by side on the support rail, each of which circuit breakers has on an undersurface a mounting recess having on one boundary edge an inwardly-turned lip engaging behind said outwardly extending flange of the support rail; and, extending alongside the support rail, an elongate busbar to which one terminal of each circuit breaker is electrically connected, wherein the busbar is detachably supported on at least two longitudinally spaced seperately formed brackets which are detachably mounted on and are electrically insulated with respect to the support rail, each circuit breaker being so detachably mounted on the support rail and/or so detachably connected to the busbar that any circuit breaker can be removed from the support rail without disconnecting any other circuit breaker from the busbar or removing the busbar.

2. An electrical distribution board as claimed in Claim 1, wherein each bracket detachably supporting the busbar on the support rail is of L-shape, one limb of the L-shaped bracket being detachably connected to the support rail and the other limb of the bracket providing a support to which the busbar is detachably connected.

3. An electrical distribution board as claimed in Claim 2, wherein the said one limb of each L-shaped bracket has an upstanding boss with a head having a peripherally continuous or discontinuous protruding rim, the head being of such a shape that it passes through one of a plurality of longitudinally spaced holes in the base of the channel-shaped support rail and, by rotation of the support bracket with respect to the support rail, detachably secures the bracket to the support rail.

4. An electrical distribution board as claimed in Claim 3, wherein the head of the boss of each L-shaped bracket and each hole in the base of the channel-shaped support rail is of approximately square shape, the head being so orientated with respect to the orientation of the holes in the support rail that, when the limbs of the bracket are substantially normal to the longitudinal axis of the support rail the bracket is detachably secured to the support rail.

5. An electrical distribution board as claimed in any one of the preceding Claims in which the busbar is an elongate member of L-shaped transfer cross-section, wherein the limb of each bracket on which the busbar is supported has a resiliently lug integral with the limb which is of such a shape that one leg of the L-shaped busbar is clamped between a surface of the limb of the bracket and the resilient lug.

6. An electrical distribution board as claimed in Claim 5, wherein the surface of the lug of each bracket nearer the surface of the limb of the bracket or said surface of the limb of the bracket has an upstanding inclined pad which presses the leg of the busbar against the opposed surface of the limb of the bracket or of the lug.

7. An electrical distribution board as claimed in Claim 5 or 6, wherein the limb of each bracket carrying the lug has integral with and dependant from the undersurface of the limb at least one reinforcing fin in which is an aperture through which passes an electrically conductive neutral bar which extends lengthwise alongside the busbar.

8. An electrical distribution board as claimed in Claim 7, wherein an isolator and/or a residual current circuit breaker is or are electrically connected to the neutral bar and is or are detachably mounted on the support rail, neither of which need be disconnected from the support rail when a circuit breaker is to be removed.

9. An electrical distribution board as claimed in Claim 7 or 8, wherein, between the limb of each bracket carrying the lug and the aperture in the or each reinforcing fin through which the neutral bar passes, there is provided a slot through which passes an elongate strip of electrically insulating material which provides positive electrical insulation between the busbar and the neutral bar throughout the length of the busbar.

10. An electrical distribution board as claimed in any one of the preceding Claims, wherein each bracket is made of electrically insulating material.

11. An electrical distribution board as claimed in any one of the preceding Claims, wherein the support rail also has detachably mounted on the rail one or more than one of a lamp, a bell transformer, a timer and a push button, none of which need be disconnected from the support rail when a circuit breaker is to be removed.

12. An electrical distribution board as claimed in any one of the preceding Claims, wherein the distribution board is mounted in an enclosure and the support rail is so detachably secured to a wall of the enclosure that there is sufficient space between the said wall of the enclosure and the support rail to enable insulated electric conductors to pass therebetween and to be connected to terminals of the circuit breakers.

13. An electrical distribution board as claimed in any one of the preceding Claims, wherein the support rail has a transverse cross-section of channel-shape, the oppositely disposed side walls of the channel each having along its free edge an outwardly extending flange; each of the circuit breakers has on a boundary edge of its mounting recess opposite to that having an inwardly-turned lip, an inwardly protruding catch which is urged by an associated spring towards the inwardly turned lip and which is a snap-fit behind the outwardly extending flange of the support rail opposite to that engaged by the inwardly-turned lip; the circuit breakers are directly clamped to the busbar; and each circuit breaker is movable with respect to its spring loaded catch in a direction towards the flange engaged by the inwardly turned lip of the circuit breaker and such relative movement is prevented by an adjustable stop which engages an abutment on the support rail, the arrangement being such that, after the circuit breaker has been disconnected from the busbar, by disengaging the adjustable stop from the abutment on the support rail, the circuit breaker can be moved with respect to the spring loaded catch to disengage the inwardly turned lip from the associated flange of the support rail and thereby permit removal of the circuit breaker.

14. An electrical distribution board as claimed in Claim 13, wherein each circuit breaker is indirectly electrically connected to the busbar by a separately formed link which is of such a form that, when it is desired to remove a circuit breaker from the support rail, after the link has been disconnected from the busbar and the spring-loaded catch manually retracted to disengage the catch from the associated flange of the support rail, said link will permit tilting of the circuit breaker and lateral movement of the circuit breaker with respect to the support rail to disengage the inwardly turned lip from the other flange of the support rail.

FIG 1

0272872

FIG. 2

0272872

FIG. 3